(19) Europäisches Patentamt
European Patent Office
Office européen des brevets

(11) **EP 1 338 937 A1**

(12) **EUROPEAN PATENT APPLICATION**
published in accordance with Art. 158(3) EPC

(43) Date of publication:
27.08.2003 Bulletin 2003/35

(51) Int Cl.⁷: **G05D 3/12**

(21) Application number: 01963570.5

(22) Date of filing: 10.09.2001

(86) International application number:
**PCT/JP01/07851**

(87) International publication number:
**WO 02/025390 (28.03.2002 Gazette 2002/12)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 20.09.2000 JP 2000284444

(71) Applicant: **KABUSHIKI KAISHA YASKAWA DENKI
Kitakyushu-Shi, Fukuoka 806-0004 (JP)**

(72) Inventors:
• **HAGIHARA, Jun,
KABUSHIKI KAISHA YASKAWA DENKI
kitakyushu-shi, Fukuoka 806-0004 (JP)**

• **IMAZU, Atsushi,
KABUSHIKI KAISHA YASKAWA DENKI
kitakyushu-shi, Fukuoka 806-0004 (JP)**
• **YASUDA, Ken'ichi,
KABUSHIKI KAISHA YASKAWA DENKI
kitakyushu-shi, Fukuoka 806-0004 (JP)**
• **OGURO, Ryuichi,
KABUSHIKI KAISHA YASKAWA DENKI
kitakyushu-shi, Fukuoka 806-0004 (JP)**

(74) Representative: **Grünecker, Kinkeldey,
Stockmair & Schwanhäusser Anwaltssozietät
Maximilianstrasse 58
80538 München (DE)**

(54) **SERVO CONTROL METHOD**

(57)    Flexible structures with two or more inertia systems connected through spring elements have heretofore presented problems that references and loads do not perfectly accord and that complicated calculations required involve an enormous amount of calculations, a servo control method using feed-forward is characterized by comprising the steps of expressing the position of a load and the position of a motor in respective functions capable of higher order differentiation, determining such functions capable of higher order differentiation from operating conditions (4) and mechanical parameters (5), calculating the motor position, speed and torque reference from the determined functions capable of higher-order differentiation, and using the calculated-motor position, speed and torque reference as feed-forward references or of calculating a motor torque reference from the determined function capable of higher order differentiation, inputting the calculated torque reference into a mechanical model, and using the obtained motor position, speed and torque reference as feed-forward references.

FIG. 1

**Description**

Technical field of the invention

The present invention relates to a method for controlling a servomotor that drives a feed shaft of a machine tool and a robot arm, etc., and in particular, a method for carrying out feed-forward control in order to improve the follow-up ability to references.

Background of the invention

Conventionally, feed-forward control has been frequently employed as a method for improving the follow-up ability to references. At this time, in a prior art system, it has been common that a value obtained by differentiating a position reference is used as a speed feed-forward reference value, and a value obtained by differentiating the same again is used as a torque feed-forward reference value.

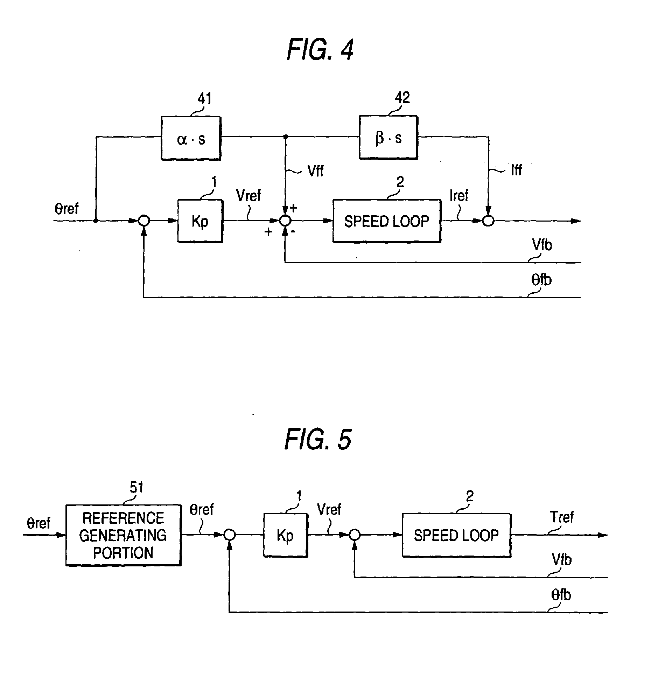

As one of the arts which might be related to this invention, "Feed-forward control method for servo motor" of Japanese Patent Publication No. 2762364 discloses the following. That is, Fig. 4 is a block diagram showing the construction of a prior art system. In Fig. 4, first, the method is such that a value obtained by multiplying a deviation between position reference $\theta$ref and real position $\theta$fb by position loop gain Kp at position "1" is made into speed reference Vref, next, a value obtained by multiplying a value, which is obtained by differentiating the position reference value $\theta$ref at a differentiator 41, by coefficient $\alpha$ is made into speed feed-forward reference Vff, and is added to the speed reference Vref. Next, a deviation between the speed reference Vref and real speed Vfb is obtained, and is subjected to a speed loop process at "2", thereby acquiring current reference value Iref, and next a value obtained by differentiating the speed feed-forward reference Vff at a differentiator 42 and by multiplying it by coefficient $\beta$ is made into current feed-forward Iff and is added to a current reference. It is described that the method brings about an effect of improving the response ability of the speed loop and current loop and of improving a response delay in the servo system.

Further, another related art is a "method for preparing references in positioning control system" of Japanese Unexamined Patent Publication No. Hei-10-149210, which employs such a construction as shown in Fig. 5. The publication discloses a method for improving a follow-up ability to references and achieving complete follow-up, wherein a transfer function including a control system and a mechanics system is inversely solved in the reference generating portion 51, a position reference is prepared, in which a transfer function from a position reference to a load position is made into 1. Reference symbols shown in Fig. 5 are the same as those in Fig. 4.

However, the two prior art examples present the following problems.

First, in the method shown in the Prior art example 1, there is no problem where a control mechanics system is rigidly coupled to a servomotor. In the case of flexible structures with two or more inertia systems, which are coupled together by means of spring elements, an reference in which no mechanical spring element is taken into consideration would be inputted, wherein a problem arises, by which a load side vibrates even if a motor follows up as per reference. Resultantly, there is a problem by which the load cannot follow up with the reference.

Second, in the method disclosed by the Prior art example 2, it is possible to carry out complete follow-up even in a case of two or more inertia systems since references are generated with the transmission characteristics of the entire system taken into consideration in order to solve the problem incidental to the Prior art example 1. However, since a transfer function including the control system is used, there is such a problem by which it becomes troublesome since an inverse transfer function is solved again when altering the characteristics of the control system such as a change in response to a speed loop for improvement in disturbance response. Also, since complicated calculations are required, there is another problem which brings about a remarkable increase in the calculation amount.

It is therefore an object of the invention to provide a servo control method that is able to solve the above-described problems.

DISCLOSURE OF THE INVENTION

In order to achieve the above-described object, the present invention provides a servo control method using feed-forward, in which the position of a load and the position of a motor are expressed by respective functions capable of higher order differentiation, the respective functions capable of higher order differentiation being determined on the basis of operating conditions and mechanical parameters, the position, speed and torque references of the motor are calculated from functions capable of a determined higher order differentiation, and the obtained motor position and speed, and the above-described torque references are made into feed-forward references.

Also, in such a construction as set forth in Claim 2, the present invention provides a servo control method using feed-forward, in which the position of a load and the position of a motor are expressed by respective functions capable of higher order differentiation, the respective functions capable of higher order differentiation being determined on the basis of the operating conditions and mechanical parameters, torque references of the motor are calculated from functions capable of the determined higher order differentiation, the calculated torque references are inputted into a mechanical model, and the obtained motor position, speed, and the above-described torque references are made into feed-forward references.

Also, functions capable of higher order differentiation may be the 15th order polynomial equation.

In addition, the above-described operating conditions may be a moving distance and moving time.

Further, when determining the above-described functions capable of higher order differentiation, a dynamic equation of the mechanics system may be used.

BRIEF DESCRIPTION OF THE DRAWINGS

Fig. 1 is a block diagram showing a construction of Embodiment 1 of the invention;

Fig. 2 is a block diagram describing a construction of Embodiment 2 of the invention;

Fig. 3 is a flowchart describing a processing sequence of the invention;

Fig. 4 is a block diagram describing a construction of Prior art example 1; and

Fig. 5 is a block diagram describing a construction of Prior art example 2.

BEST MODE OF CARRYING OUT THE INVENTION

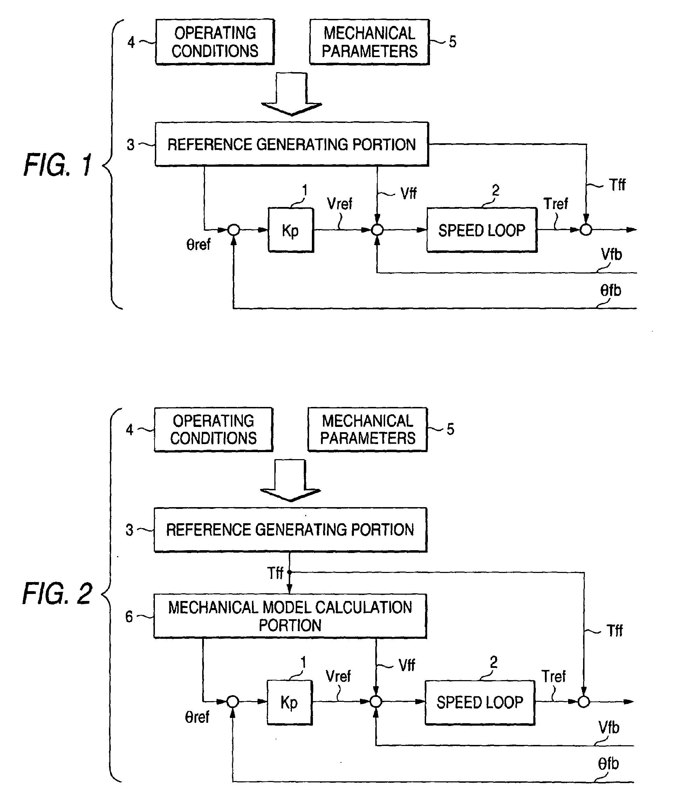

Adescription is given of embodiments of the invention with reference to the accompanying drawings. Herein, it is assumed that a controlling mechanics system can be approximated by a two-inertia system. Fig. 1 is a block diagram showing an embodiment of the invention. In Fig. 1, reference number 1 denotes a position loop proportional gain Kp, 2 denotes a speed loop, 3 denotes an reference generating portion for calculating a motor position, speed, and torque reference. Prescribed operating conditions 4 are stored in a memory. Reference number 5 denotes amechanical parameter which is stored in a memory.

Proportional integration control is carried out in the speed loop 2. Also, a moving distance dist and moving time te are inputted and stored as the operating conditions 4 as set forth in Claim 4. Motor inertia J1, load inertia J2, spring constant Kc, and dumping coefficient DL are inputted and stored as the mechanical parameters 5.

Using the four operating conditions and five mechanical parameters, which are stored in the memory, motor position reference θref, motor speed reference Vff, and motor torque reference value Tff are calculated by the reference generating portion 3 and are made into control inputs.

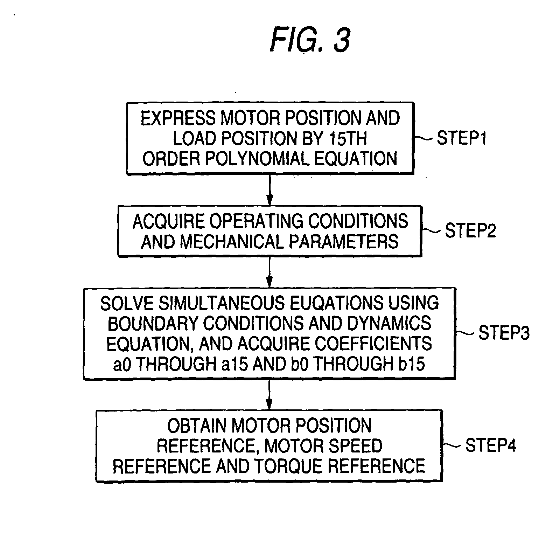

Hereinafter, a detailed description is sequentially given of processing contents in the reference generating portion 3 using a flowchart of Fig. 3.

Step 1: The position X1(t) of the load and motor positions Xm(t) are, respectively, made into the 15th order polynomial equation as shown in Equation (1). The reason why the equation is made into the 15th order is that 16 boundary conditions described below exist.

$$X1\ (t) = a15 \cdot t^{15} + a14 \cdot t^{14} + a13 \cdot t^{13} + \cdots\cdots a1 \cdot t^{1} + a0 \qquad (1)$$

$$Xm(t) = b15 \cdot t^{15} + b14 \cdot t^{14} + b13 \cdot t^{13} + \cdots\cdots b1 \cdot t^{1} + b0$$

(where a0 through a15 and b0 through b15 are coefficients)

Step 2: The operating conditions and mechanical parameters are acquired.

\* Operating conditions: dist, te

\* Mechanical parameters: J1, J2, Kc, DL

Step 3: By solving boundary conditions shown in Expression (2) and dynamic equation of the mechanics system shown in Expression (3), the coefficients a0 through a15 and b0 through b15 are acquired.

At the motor and load, the boundary conditions become such that, when operation starts (t=0), Position = Speed = Acceleration = Jerk = 0, and when operation ends (t=te), position = dist, speed = Acceleration = Jerk = 0, and the conditions become 16 as shown in Expression (2).

$$X1^{(0)}(0)=0, X1^{(1)}(0)=0, X1^{(2)}(0)=0, X1^{(2)}(0)=0,$$

$$X1^{(0)}(te)=dist, X1^{(1)}(te)=0, X1^{(2)}(te)=0, X1^{(3)}(te)=0,$$

$$Xm^{(0)}(0)=0, Xm^{(1)}(0)=0, Xm^{(2)}(0)=0, Xx^{(3)}(0)=0,$$

$$Xm^{(0)}(te)=dist, Xm^{(1)}(te)=0, Xm^{(2)}(te)=0, Xm^{(3)}(te)=0, \qquad (2)$$

However, it is assumed that subscript $A^{(n)}$ expresses an nth order differentiation of A (A= *X1* or *Xm*). Also, the dynamic equation of a two-inertia mechanics system becomes as in Expression (3) below:

$$J2 \cdot X1^{(2)}(t) + DL \cdot (X1^{(1)}(t) - Xm^{(1)}(t)) +$$

$$Kc \cdot (X1^{(0)}(t) - Xm^{(0)}(t)) = 0 \qquad (3)$$

As described above, coefficients a0 through a15 and b0 through b15 are acquired by Expressions (2) and (3). Step 4: The motor position reference value $Xm^{(0)}(t)$ is obtained from the coefficient acquired in Step 3. By differentiating the same, the motor speed reference value $Xm^{(1)}(t)$ can be obtained.

Finally, the torque reference value Tref is obtained as in Expression (4) below.

$$Tref(t) = J1 \cdot Xm^{(2)}(t) + J2 \cdot X1^{(2)}(t) \qquad (4)$$

In order to solve Problem 1 in the method, since references are generated with the operating characteristics of the mechanics system taken into consideration, it becomes possible to cause the load side to be subjected to complete follow-up without being vibrated.

In addition, since the references are generated not by a transfer function including the control system but by only the dynamic equation of the mechanics system, it is not necessary to change any references without being influenced at all with respect to a change in the control gain.

Next, a description is given of a method according to Embodiment 2 as set forth in Claim 2, using Fig. 2.

Where the output of references is limited to one input due to the limitation hardware, three inputs of motor position reference, motor speed reference and motor torque reference are not enabled as in Embodiment 1.

In such a case, first, the torque reference value Tref(t) is led out by the sequence described in Embodiment 1. Next, as shown by reference number 6 in Fig. 2, amechanical model is held in advance in the controller, and the torque reference led out as described above is inputted into the mechanical model, and the motor position and motor speed, which are calculated in the mechanical model, may be made into the feed-forward reference values. With the method, it is sufficient that only the torque reference is inputted into the control calculation portion, wherein effects similar to those in Embodiment 1 can be brought about.

Further, although a description is given of a method for feeding the motor position, motor speed, motor torque reference forward in the above-described two embodiments, it is a matter of course that a current reference is acquired instead of the torque reference and may be subjected to feed-forward.

As described above, according to the present invention, first, the load position and motor position are expressed by a higher-order differentiable polynomial equation, and coefficients of the polynomial equation are determined according to the boundary conditions obtained from the operating conditions (moving distance and moving time) and a mechanical dynamic equation. Finally, the motor position reference, motor speed reference, and motor torque reference are calculated, and these are used as feed-forward reference values, whereby such an effect can be brought about, by which a flexible structure can be caused to completely follow up with references.

In addition, according to the invention, where a gain, etc., of the control system is changed, the same reference may be used, wherein such an effect can be brought about, by which troublesome re-calculations, etc., are not required even in the case where the feed-forward references are calculated in advance by an off-line process.

INDUSTRIAL APPLICABILITY

According to the invention, it becomes possible for flexible structures with two or more inertia systems, which are coupled by spring elements, to be caused to completely follow up with references.

Fig. 1

| 4 | Operating conditions |
|---|---|
| 5 | Mechanical parameters |
| 3 | Reference generating portion |
| 2 | Speed loop |

Fig. 2

| 4 | Operating conditions |
|---|---|
| 5 | Mechanical parameters |
| 3 | Reference generating portion |
| 6 | Mechanical model calculation portion |
| 2 | Speed loop |

Fig. 3

| Step 1 | Express motor position and load position by 15th order polynomial equation. |
|---|---|
| Step 2 | Acquire operating conditions and mechanical parameters |
| Step 3 | Solve simultaneous equations using boundary conditions and dynamics equation, and acquire coefficients a0 through a15 and b0 through b15. |
| Step 4 | Obtain motor position reference, motor speed reference, and torque reference. |

Fig. 4

| 2 | Speed loop |
|---|---|

| 51 | Reference generating portion |
|---|---|
| 2 | Speed loop |

**Claims**

**1.** A servo control method using feed-forward, comprising: the steps of expressing a load position and a motor position in terms of a higher-order differentiable function; determining said higher-order differentiable function on the basis of operating conditions and mechanical parameters; calculating the position, speed and torque reference of said motor on the basis of said determined higher-order differentiable function; and making said calculated motor position, speed, and torque references into feed-forward references.

**2.** A servo control method using feed-forward, comprising: the steps of expressing a load position and a motor position in terms of a higher-order differentiable function; determining said higher-order differentiable function on the basis of operating conditions and mechanical parameters; calculating torque references of said motor on the basis of said determined higher-order differentiable function; inputting said calculated torque references into a mechanical model; and making said obtained motor position, speed, and torque references into feed-forward references.

**3.** The servo control method as set forth in Claim 1 or 2, wherein said higher-order differentiable function is a 15th order polynomial equation.

**4.** The servo control method as set forth in Claim 1 or 2, wherein said operating conditions are a moving distance and moving time.

**5.** The servo control method as set forth in Claim 1 or 2, wherein a dynamic equation of the mechanics system is used, which is controlled when said higher-order differentiable function is determined.

*FIG. 1*

*FIG. 2*

# FIG. 3

EXPRESS MOTOR POSITION AND LOAD POSITION BY 15TH ORDER POLYNOMIAL EQUATION — STEP1

ACQUIRE OPERATING CONDITIONS AND MECHANICAL PARAMETERS — STEP2

SOLVE SIMULTANEOUS EUQATIONS USING BOUNDARY CONDITIONS AND DYNAMICS EQUATION, AND ACQUIRE COEFFICIENTS a0 THROUGH a15 AND b0 THROUGH b15 — STEP3

OBTAIN MOTOR POSITION REFERENCE, MOTOR SPEED REFERENCE AND TORQUE REFERENCE — STEP4

## FIG. 4

## FIG. 5

## INTERNATIONAL SEARCH REPORT

| International application No. |
| --- |
| PCT/JP01/07851 |

A. CLASSIFICATION OF SUBJECT MATTER
    Int.Cl$^7$    G05D3/12

According to International Patent Classification (IPC) or to both national classification and IPC

B. FIELDS SEARCHED

Minimum documentation searched (classification system followed by classification symbols)
    Int.Cl$^7$    G05D3/00-3/20, G05B11/00-13/04

Documentation searched other than minimum documentation to the extent that such documents are included in the fields searched

| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2000-148210 A (Toyota Central Research and Development Laboratories, Inc.), 26 May, 2000 (26.05.00), page 4, right column, line 16 to page 9, left column, line 29; Figs. 1, 2, 4, 5  (Family: none) | 1,2,4,5 |
| Y | JP 11-309646 A (Toshiba Machine Co., Ltd.), 09 November, 1999 (09.11.99), page 8, left column, lines 2 to 50 & US 6147468 A | 1,2,4,5 |
| A | JP 2000-172341 A (Mitsubishi Electric Corporation), 23 June, 2000 (23.06.00), (Family: none) | 1~5 |
| A | JP 11-265202 A (Sony Corporation), 28 September, 1999 (28.09.99), (Family: none) | 1~5 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 November, 2001 (27.11.01) | 11 December, 2001 (11.12.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)